# EUROPEAN PATENT SPECIFICATION

(11) **EP 0 351 060 B1**
(45) Date of publication and mention of the grant of the patent: **14.12.1994**
(21) Application number: 89305981.6
(22) Date of filing: 13.06.1989
(51) Int. Cl.: H04M 1/02

(54) **Control panel structure for door telephones**
Bedienungspultsystem für Türsprechanlagen
Structure de panneau de commande pour interphones

(30) Priority: 12.07.1988 ES 8802179
(43) Date of publication of application: 17.01.1990
(73) Proprietor: Gorrochategui Grajirena, Javier, E-31014 Pamplona (ES)
(72) Inventor: Gorrochategui Grajirena, Javier, E-31014 Pamplona (ES)
(74) Representative: Maguire, Peter Albert

(56) References cited:
- DE-A- 2 921 485
- DE-C- 3 214 435
- FR-A- 2 248 563
- GB-A- 2 149 221

## Description

This invention is concerned with a control panel system for entryphones.

In control panels for entryphones it is desirable, on one hand, to attain adequate functional characteristics, in the sense of providing a simple assembly and ease of technical manipulation, as well as a sufficient capacity of buttons, in acceptable dimensions while on the other hand there is importance to attain an aesthetic appearance in tune with the places in which the panels are to be situated, which is usually in the entrances of buildings.

Various forms of panels have been developed with the object of improving the characteristics mentioned above, without having achieved a completely satisfactory solution as, in spite of the improvements, deficiencies continue to exist, either in the construction of the panels themselves, or through difficulties in their assembly or installation.

In this respect, a proposal is already known in which controls are fixed in a column-like structure, with columns arranged one next to the other, each column being defined by a support profile which has openings for the assembly of modules which will later carry corresponding buttons, loudspeaker etc.

This proposal results in a compact structure, but one which is not properly speaking modular, since, as a function of the arrangement which each installation requires and of the number of buttons, it relies on distinct support profiles, of greater or lesser length, which creates a real manufacturing and storage problem. Also, this proposal has, inherently, only one button in each line of each column, so that for installations in buildings with many residences the control panel has to be very large.

It is known from DE-C-3 214 435 of RITTO-WERK to provide a station for a call connecting system which can be extended and comprising a housing and a replaceable front panel with the required number of control elements.

It is also known from GB-A-2 149 221 of L.T. TERRANES to provide a modular pushbutton board comprising a supporting body for the modules which form the pushbutton board, which is obtained from a section in which openings are made for housing such modules, and which is cut to the necessary length for each specific application.

It is an object of the present invention to provide a control panel system for entryphones which mitigates the disadvantages of prior proposals and facilitates access to the inside of the panel system.

The present invention provides a control panel system for entryphones having a front panel of substantially constant cross-section with openings or windows for cardholders and push-buttons, or other working units of the entryphone, the panel being hinged on an installation box, characterised by caps, which secure the panel to the installation box by means of fasteners, the caps having covers which conceal the fasteners, and which are resiliently mounted on the caps so as to be displaceable relative thereto to allow access to the fasteners, and fastening means for holding the covers in position to conceal the fasteners.

Preferably the system comprises pivotal members which provide lateral hinging of the panel on the box, so that said panel can swing sideways to give access to connections and elements inside the box. Advantageously studs are provided on the covers by which the covers are mounted on the caps for limited displacement under the action of resilient means and the fastening means.

The panel is preferably composed from modular blocks which are joined together by means of rods which pass through the modular blocks, a laminar intermediate piece being provided between adjacent blocks, which piece separates the respective blocks and provides outside surface continuity for the front panel.

The installation box is preferably formed from modular parts provided at their sides with hooking studs and casing recesses interengageable in such a way that the box can be assembled from the parts, the box further having recesses in the sides for the joining and housing of cable ducts, through which different boxes may be connected in parallel.

The system may thus provide a simple control panel, in which all the integral parts are modular pieces or units, so that with a reduced number of distinct modular components, the construction and assembly of all the necessary kinds of control panels may be achieved in accordance with the multiplicity of different requirements for application installations.

With this system the panel offers moreover the possibility of a simple manipulation, both in assembly and for any necessary later adjustment in the integral working elements, since the opening by swinging towards the side allows easy access to all the internal elements, the necessary length of the connecting cables being minimal and without the panel being submitted at any time to unnecessary loads, as are produced in traditional arrangements, in which the panel is pivoted in a vertical plane.

On the other hand, the particular constitution of the modular blocks which make up the card holders and buttons offers the possibility of installation of a large number of different buttons within a panel of considerably reduced size, which is extremely practical and very useful for buildings which contain a large number of residences with the same main entrance.

The simplification of construction and ease of assembly may be increased by a particular structuring of the buttons, which may be made up with a grid-like box and a touch key which moves within the same, said key having a push spring, which is provided with internal touch conducting means and functions as a contact element, establishing at the point of contact a self-cleaning action which assures durable working, while said spring moreover fulfils the function of a collaborator in an opening for a connection in which a conductor cable must be clamped, thus facilitating connection of said cable.

In order to better understand the nature of the invention, in the attached drawings there is shown, by way only of a descriptive and non-limitative example, a preferred embodiment, to which reference is made in the following description of said drawings.
Figure 1 shows in perspective an exploded view of the complete unit of a control panel according to the embodiment, with the different elements in correlated positions of assembly,
Figure 2 is an enlarged perspective view in the assembly stage of an integral modular block of card holders and buttons,
Figures 3 and 4 are respective exploded perspective views of integral blocks of a sound unit and of a light unit to be incorporated in the panel,
Figure 5 is a perspective view of a panel button,
Figures 6, 7 and 8 show views in different operating positions of the button,
Figures 9, 10 and 11 show respective views of the button from the other position, showing different connection situations in which the spring intervenes as collaborator for opening,
Figure 12 is a perspective section of the lampholder of one of the integral blocks of the cardholders and buttons,
Figures 13 and 14 are both perspective views of the assembly stage of the electrical connection means,
Figure 15 is a perspective view of the assembly stage of the button (32).

### Explanatory details

- 1.: - Modular section blocks
- 2.: - Windows
- 3.: - Connecting rods
- 4.: - Laminar intermediate piece
- 5.: - Caps
- 6.: - Hinges
- 7.: - Plate levelling screws
- 8.: - Installation box
- 9.: - Hinge fixing screw (6)
- 10.: - Resilient gasket
- 11.: - Covering frames
- 12.: - Studs for frames (11)
- 13.: - Springs
- 14.: - Screws for fixing grids (11)
- 15.: - Box assembly studs
- 16.: - Recess for coupling the cable duct
- 17.: - Cable duct
- 18.: - Blocks for cardholders and buttons
- 19.: - Grid for the blocks (18)
- 20.: - Fixing lug of block
- 21.: - Front cover for the block (18)
- 22.: - Keys
- 23.: - Cardholder glasses
- 24.: - Cardholder backplates
- 25.: - Lampholder
- 26.: - Frame
- 27.: - Connector contact housings
- 28.: - Loudspeaker
- 29.: - Lighting unit
- 30.: - Loudspeaker body
- 31.: - Lighting unit body
- 32.: - Push-button
- 33.: - Cable connector screw
- 34.: - Cable connector nut
- 35.: - Cable connector plate
- 36.: - Block interconnector body
- 37.: - Block interconnector strap
- 38.: - Housing
- 39.: - Push-button spring
- 40.: - Spring (39) contact section
- 41.: - Spring (39) connector section
- 42.: - Connection terminal conductor element
- 43.: - Connection terminal
- 44.: - Conductor cable
- 45.: - Openings
- 46.: - Tongue
- 47.: - Recesses
- 48.: - Studs
- 49.: - Flanges
- 50.: - Cover
- 51.: - Potentiometer

The drawings show a control panel system for an entryphone, in which a front panel is made essentially from a single section divided into modular blocks (1) of the desired length, said blocks having in front appropriate openings or windows (2) for the incorporation of cardholders and push-buttons, as well as for light and sound units, or whatever else has to be provided on the panel.

In assembly of the control panel, the aforementioned modular section blocks (1) are joined together to form an integral structure, by means of longitudinal rods (3) long enough to link them at the sides, and inserted between each two adjacent modular section blocks (1) is a laminar intermediate piece (4), which by means of the rods (3) remains between the blocks, serving as a separation between the respective groups of the same, each intermediate piece (4) having on its outer edge a finish in harmony with the external face of the blocks (1), so that the panel, when assembled, offers surface continuity as if it were made from one piece.

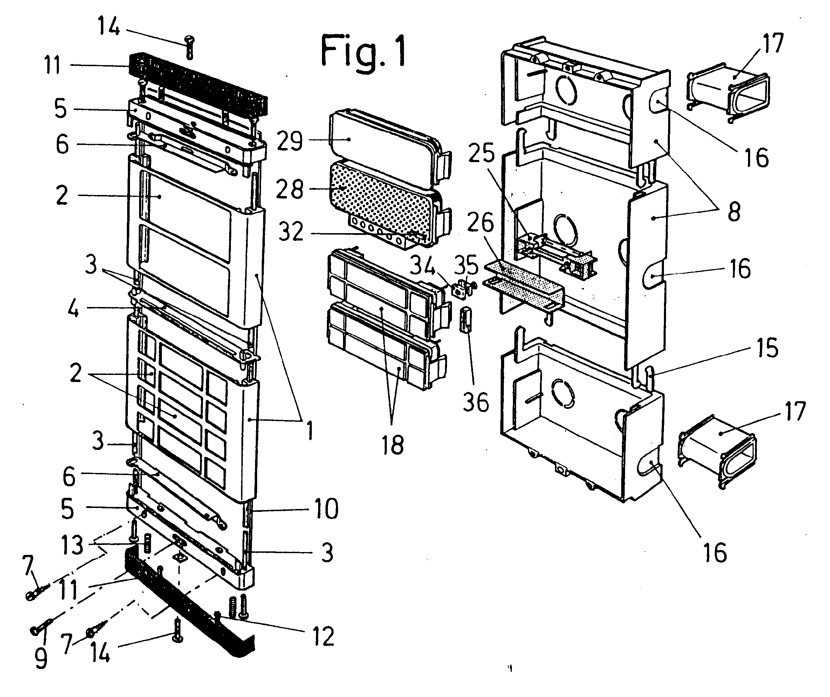

Said assembly of the control panel is completed by caps (5), by which a rigid connection of the structure is achieved, including on such caps (5) hinge members (6), which are mounted in such a way that on one of the sides (the left-hand side in Fig. 1) of the control panel they are pivoted to a rod (3) to swing on the rod. Each of the hinge members (6), is held by a screw (9) on a corresponding installation box (8), to which the control panel is thus attached like a door, able to be opened in a horizontal movement towards the side by turning on the pivots of the hinge members (6), while the configuration of these allows levelling of the control panel, by means of screws (7) which allow the position of the control panel to be regulated, both in its lateral "swinging", as well as in its projection towards the front, so that it is aligned and levelled.

With the fixing of the caps (5) to the installation box (8) the closing of the front of the control panel against the box (8) is secured, a resilient gasket (10) ensuring the water-tightness of the closure.

The caps (5) are provided with respective covering frames (11), which are mounted over the caps (5), engaging in them with studs (12) and with the interposition of springs (13), and secured by means of fixing screws (14), in such a way that when said screws (14) are tightened to their maximum, the springs (13) are compressed and the frames (11) cover the respective caps (5) hiding the heads of the fixing screws (9) and of other screws which pass through the same; but when the screws (14) are slackened, the frames (11) come away by themselves, as a result of the pressure from the springs (13), exposing the heads of the screws which were previously hidden, in order to effect opening of the panel, when access to the elements and connections inside is required or for other necessary operations.

The installation box (8) is in its turn made up from modular units, whose joining together is achieved by means of a simple assembly of various pieces, their mutual attachment being assured, by the engaging of respective studs (15) of each one, in corresponding recesses in the other; while said modular units making up the box (8), have, in the sides, some recesses (16), in which are housed cable ducts (17), through which is achieved the colateral union between the different parallel boxes.

Cardholders and call-buttons to be incorporated in the panel, are integrated in modular blocks (18), each one of these blocks comprising a set number of cardholders and in relation to each one of these a pair of buttons at either side, making thus four push-buttons for each block (18).

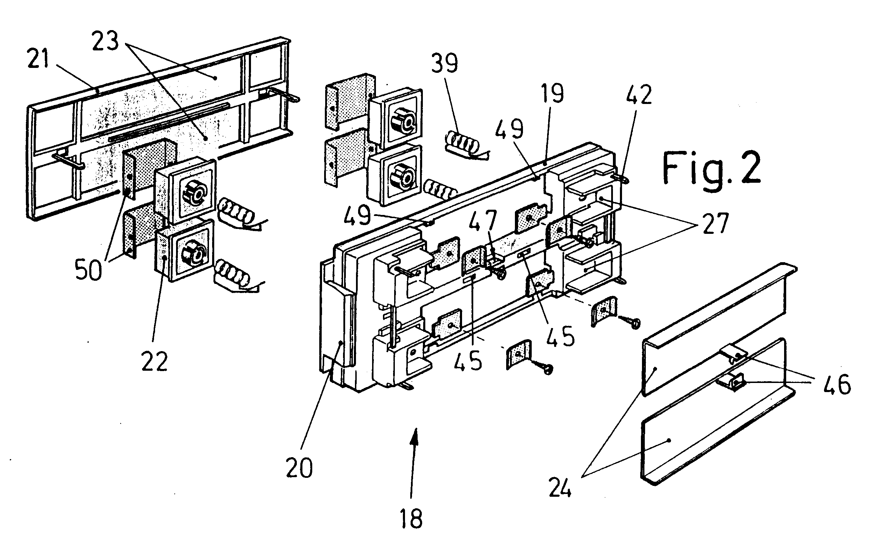

Said modular blocks (18) are composed, see Figure 2, of a structural body or frame (19), which has at its ends lugs (20) for fixing in the corresponding blocks (1) making up the panel, to whose frame is attached at the front a respective cover (21) which serves to hold the corresponding keys (22) of the push-buttons which project through it, each cover (21) defining between the respective openings for the keys (22) corresponding glasses (23) for the cardholders; while at the back the aforementioned frame (19) is closed in by cardholder backplates (24) of translucent plastic.

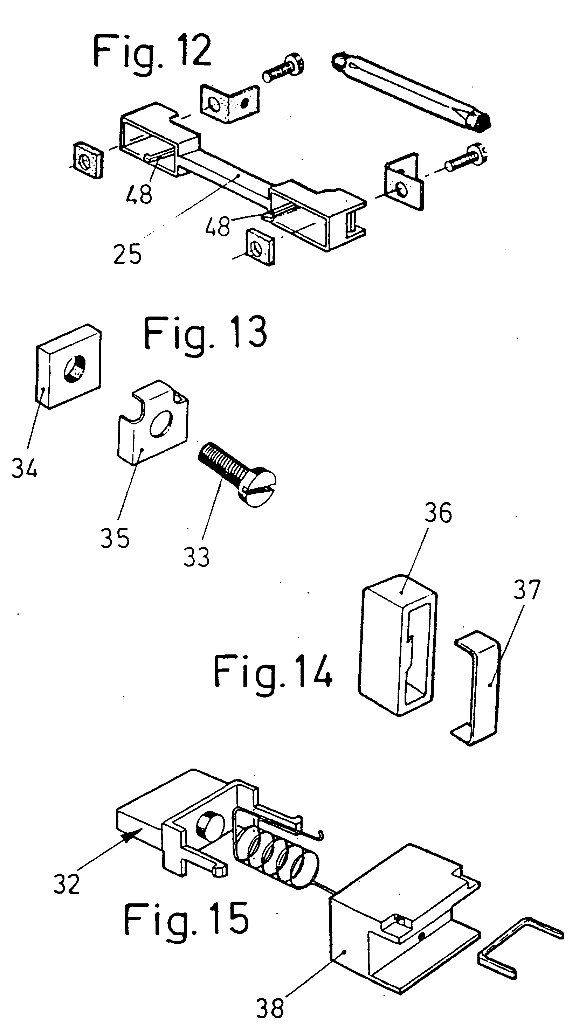

As can be seen in Figure 2, each backplate (24) has a tongue (46) whose resilient housing in a recess (47) of one wall of those existing at the sides of a central partition of the frame (19) provides, in addition to some small flanges (49), for fixing of the cardholder backplates (24). In this central partition there are also individual openings (45) into which penetrate, with a resilient coupling, studs (48) of a lampholder (25) shown in Figure 12, thus fixing the lampholder (25) centrally between the cardholders.

The lampholders (25) are selectively distributed to establish adequate illumination of the cardholders.

For the cases in which a cardholder has to display a special text, for example "wait", which must be lit up at a given moment on its own, there is a frame (26), see Figure 1, which is mounted resiliently and which provides appropriate rear masking, the frame (26) comprising resilient hooking means and housings for the assembly of the corresponding lampholders (25).

On the other hand, as can be seen in Figure 2, the frame (19) of each block (18) defines housings (27) for the corresponding electrical connecting contacts.

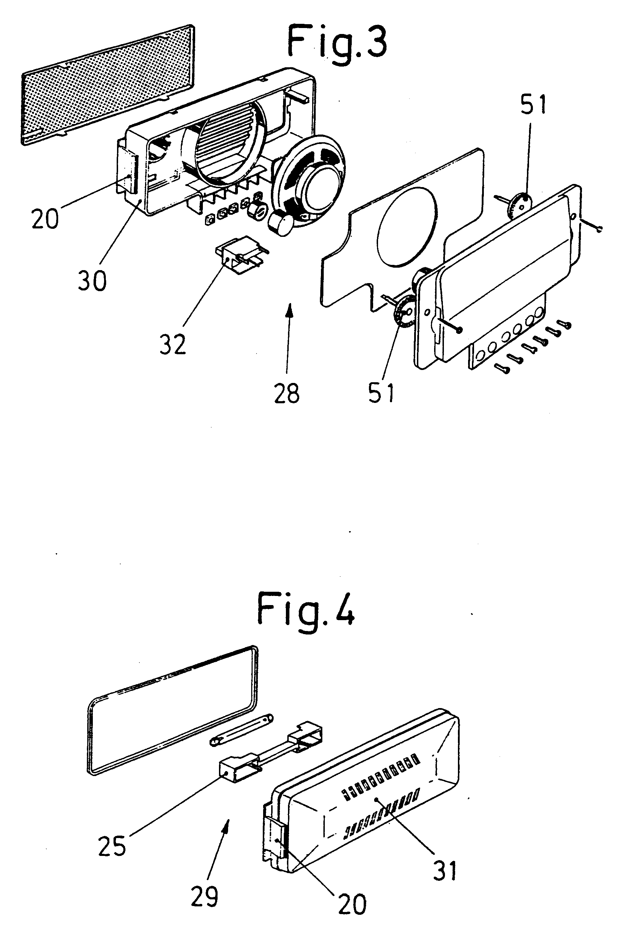

The loudspeaker (28) and the light unit (29), are made up equally in respective modular blocks mountable in respective windows (2) of one of the blocks (1) of the constituent profile of the panel, see Figure 1, the respective bodies (30 and 31) of said units (28 and 29) having for that purpose appropriate fixing lugs (20) in a corresponding section of the profile (1), see Figures 3 and 4. In the loudspeaker (28) there may be incorporated a push-button (32) and that unit may comprise two potentiometers (51), see Figure 3, through which may be regulated the volume of sound both in the panel-telephone direction, and the opposite direction. The light unit (29), is provided in its case with its own appropriate lampholder (25), as that of the lampholders (25) of each of the different cardholders (23), so that thus on one hand, the necessary illumination for said cardholders (23) is obtained and, through the light unit (29) are illuminated signs or symbols such as the number of the door, name of a single family household, etc.

For the working installation of the panel it is enough to position in it the necessary blocks (18) and the units (28 and 29), or whatever else may be necessary. Once each panel is assembled, with the necessary profile sections and the same fixed on the corresponding base box (8), the necessary cables are connected to the aforementioned blocks (18), by means of the contacts, see Figure 13, constituted by a screw (33) and a nut (34), between which is held a captive plate (35) like a box provided with appropriate recesses for the passage of the cables or terminals. Thus are established in their turn the necessary connections between the different blocks (18), whose interconnection is realised by means of connectors formed, see Figure 14, by a body (36) like a box open at the front, in whose interior is housed a strap (37) which allows the connection between the terminals to be connected to be made by a simple resilient clasp.

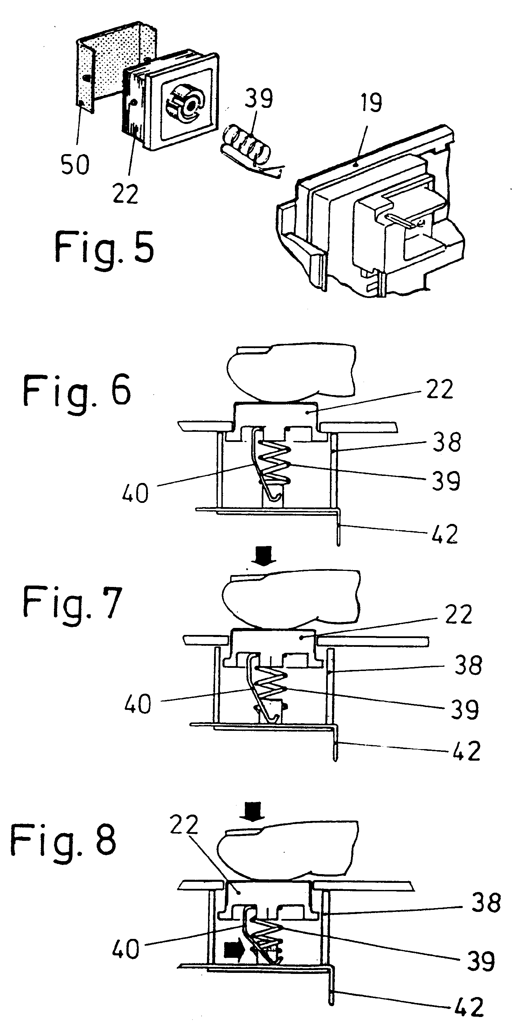

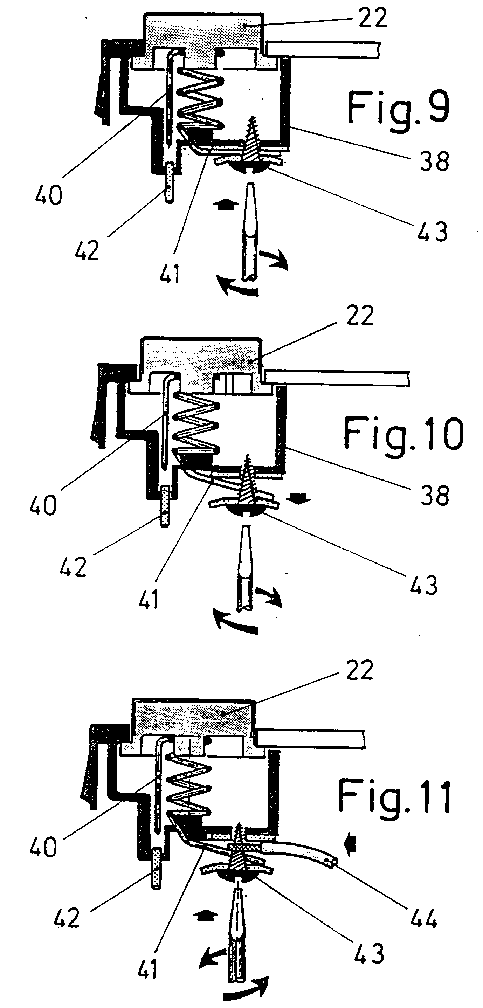

There thus results a panel system of very simple assembly and installation, due to the modular composition of all the elements and to the particular arrangement of opening to the side, which allows easy access to all the elements and connections, requiring a minimum length of connecting cables and without the system having to be subjected to loads which can deteriorate it or undo the connections; while to gain better working advantages it may moreover be provided with a particular construction of the push-buttons, each one of them comprising, see Figures 5 to 11, a housing within the frame (19). The corresponding touch key (22) which is pushed outwards by a corresponding spring (39) moves in this housing.

Then, said push spring (39) for the key (22) may extend along respective sections (40 and 41) in its ends, in such a way that one of said extensions, for example, section (40), is in a position to make contact with the conductor element (42) which makes up one of the connection terminals, when the key (22) is pressed; while the other section (41) exits through the bottom of the frame (19) and establishes a relation with the other connection terminal (43) formed by a screw and a captive plate, so that in said terminal (43) the aforementioned section (41) acts as a resilient collaborator to separate the captive plate from its seat when the screw is slackened, thus facilitating the introduction of the conductor cable (44) which is to be connected, while at the same time by means of said section (41), the spring (39) is for its part connected also to the aforementioned terminal (43).

In this way, the same spring (39), which on one hand acts to push the key (22) outwards, on the other hand serves as an electrical conductor within the push-button and in its turn comprises a contact element for closing the circuit between the terminal (42) and the terminal (43), when the key (22) is pushed, with the feature that the contact which the section (40) makes with the terminal conductor element (42), is effected with a sliding action which due to the friction which it exercises performs self-cleaning of the contact area, thus assuring durable functioning.

As can be seen in Figure 5, each key (22) comprises a one-piece plastic body which has a raised interior, to position and retain the spring (39) in reciprocity with a projection in the base of the housing which for the key (22) defines the frame (19).

Thus, each key (22) may have a cover (50), made from a metal laminate which is positioned over the key (22) covering it up; this cover (50) is retained in its mounting by means of hooking established by the engagement of both of its side flanges, in respective housings in the key (22).

In Figure 15 is shown a push-button (32), which is provided in the unit (28), to illustrate its incorporation in a frame (38) according to a modular conception and how a spring is incorporated in an analogous solution to that of the call-buttons.

## Claims

1. Control panel system for entryphones having a front panel (1) of substantially constant cross-section with openings or windows (2) for cardholders and pushbuttons, or other working units of the entryphone, the panel (1) being hinged on an installation box (8), characterised by caps (5), which secure the panel (1) to the installation box (8) by means of fasteners (7,9), the caps (5) having covers (11) which conceal the fasteners, (7,9) and which are resiliently mounted on the caps (5) so as to be displaceable relative thereto to allow access to the fasteners, and fastening means (14) for holding the covers (11) in position to conceal the fasteners (7,9).

2. Control panel system for entryphones according to claim 1, characterised by pivotal members (6) which provide lateral hinging of the panel on the box, so that said panel can swing sideways to give access to connections and elements inside the box.

3. Control panel system for entryphones according to claim 1 or claim 2, characterised by studs (12) on the covers (11) by which the covers are mounted on the caps (5) for limited displacement under the action of resilient means (13) and the fastening means (14).

4. Control panel system for entryphones, according to claim 2 or claim 3, characterised in that the panel (1) is composed from modular blocks which are joined together by means of rods (3) which pass through the modular blocks, a laminar intermediate piece (4) being provided between adjacent blocks, which piece (4) separates the respective blocks and provides outside surface continuity for the front panel (1).

5. Control panel system for entryphones according to any preceding claim, characterised in that the installation box (8) is formed from modular parts provided at their sides with hooking studs (15) and casing recesses interengageable in such a way that the box (8) can be assembled from the parts, the box (8) further having recesses (16) in the sides for the joining and housing of cable ducts (17), through which different boxes may be connected in parallel.

## Patentansprüche

1. Bedienfeldsystem für Eingangs-Sprechanlagen, das eine Vorderplatte (1) von im wesentlichen einheitlichem Querschnitt aufweist, die mit Öffnungen oder Fenstern (2) für Kartenhalter und Drucktasten oder sonstige Bedienelementen der Sprechanlage versehen ist, wobei die Platte (1) mit Schamieren an einem Installationskasten (8) befestigt ist, der gekennzeichnet ist durch Kappen (5) , die die Platte (1) am Installationskasten (8) mittels Befestigungsschrauben (7, 9) festhalten, wobei die Kappen (5) Abdeckungen (11), die die Befestigungsschrauben (7, 9) verdecken und die elastisch an den Kappen (5) angebracht sind, so daß sie von ihnen abgenommen werden können, um den Zugang zu den Befestigungsschrauben zu ermöglichen, sowie Befestigungsmittel (14) aufweisen, mit denen die Kappen (11) in einer Stellung gehalten werden, in der sie die Befestigungsschrauben (7, 9) verdecken.

2. Bedienfeldsystem für Eingangs-Sprechanlagen nach Anspruch 1, gekennzeichnet durch Drehzapfen (6), die ein seitliches Einhängen der Platte am Kasten ermöglichen, so daß besagte Platte zur Seite gedreht werden und damit den Zugang zu den Anschlüssen und Elementen im Innern des Kastens freigeben kann.

3. Bedienfeldsystem für Eingangs-Sprechanlagen nach Anspruch 1 oder 2, gekennzeichnet durch Stifte (12) auf den Abdeckungen (11), mittels derer die Abdeckungen auf den Kappen (5) so befestigt sind, daß sie durch die Betätigung des elastischen Mittels (13) und des Befestigungsmittels (14) in begrenztem Maße beiseitegedrückt werden können.

4. Bedienfeldsystem für Eingangs-Sprechanlagen nach Anspruch 2 oder 3, gekennzeichnet dadurch, daß die Platte (1) aus modularen Blöcken besteht, die mittels durch die Modulblöcke geführten Stäben (3) zusammengehalten werden, wobei ein lamellenförmiges Zwischenstück (4) zwischen benachbarten Blöcken angebracht ist, wobei dieses Stück (4) die jeweiligen Blöcke voneinander trennt und der Vorderplatte (1) eine gleichmäßige Außenoberfläche verleiht.

5. Bedienfeldsystem für Eingangs-Sprechanlagen nach jedem der vorhergehenden Ansprüche, gekennzeichnet dadurch, daß der Installationskasten (8) aus modularen Teilen gebildet wird, die an ihren Seiten mit Hakenstiften (15) und Gehäuseaussparungen versehen sind, die so ineinandergreifen, daß der Kasten (8) aus den Einzelteilen zusammengesetzt werden kann, wobei Kasten (8) weiterhin mit seitlichen Aussparungen (16) zur Befestigung und Umhüllung der Kabelstränge (17) versehen ist, mittels derer verschiedene Kästen parallel geschaltet werden können.

## Revendications

1. Système de tableau de commande pour interphones, comportant un panneau frontal (1) de section transversale sensiblement constante, pourvu d'ouvertures ou fenêtres (2) pour des supports de cartes, et de boutons-poussoirs ou autres organes d'actionnement de l'interphone, le panneau (1) étant monté à charnière sur un coffret d'installation (8), caractérisé en ce qu'il comporte des chapeaux de fixation (5) pour bloquer le panneau (1) sur le coffret d'installation (8) au moyen d'organes de serrage (7, 9) auxquels sont associés des masques (11) pour dissimuler les organes de serrage (7, 9), ces masques pouvant se monter par engagement élastique sur les chapeaux de fixation (5), de manière à pouvoir être déplacés sur les chapeaux afin de permettre d'accéder aux organes de serrage (7, 9), des organes de fixation (14) étant en outre prévus pour maintenir en place les masques (11) afin de cacher les organes de serrage (7, 9).

2. Système de tableau de commande pour interphones selon la revendication 1, caractérisé en ce qu'il comporte des organes de pivotement (6) qui permettent de faire pivoter latéralement le panneau sur son coffret, le panneau pouvant ainsi être écarté par pivotement sur un coté, pour permettre d'accéder aux connexions et organes internes du coffret.

3. Système de tableau de commande pour interphones, selon la revendication 1 ou 2, caractérisé en ce qu'il comporte des doigts de montage (12) portés par les masques (11), pour permettre le montage des masques sur les chapeaux de fixation (5), avec un déplacement limité des masques (11) sous l'action d'organes élastiques (13) et des organes de fixation (14) des masques.

4. Système de tableau de commande pour interphones selon la revendication 2 ou 3, caractérisé en ce que le panneau (1) est composé de blocs modulaires assemblés au moyen de tiges (3) qui passent à travers les blocs modulaires, une pièce intermédiaire laminée (4) étant prévue entre les blocs adjacents, cette pièce intermédiaire (4) servant à séparer les différents blocs en assurant une surface extérieure continue pour le panneau frontal (1).

5. Système de tableau de commande pour interphones selon l'une quelconque des revendications précédentes, caractérisé en ce que le coffret d'installation (8) est formé d'éléments modulaires pourvus sur leurs bords de doigts d'accrochage (15) et de logement correspondants dans lesquels peuvent s'engager ces doigts, de manière à constituer le coffret (8) par un assemblage d'éléments modulaires, le coffret (8) comportant en outre sur ses parois latérales des logements (16) pour recevoir des conduits de passage (17) pour des câbles, afin de pouvoir connecter plusieurs coffrets en parallèle.
